**Europäisches Patentamt**

**European Patent Office**

**Office européen des brevets**

(19)

(11) Publication number : **0 348 365 B1**

# (12) EUROPEAN PATENT SPECIFICATION

(45) Date of publication of patent specification :
07.10.92 Bulletin 92/41

(51) Int. Cl.⁵ : **F16C 35/073**, F16C 19/00

(21) Application number : **89850085.5**

(22) Date of filing : **13.03.89**

(54) **Device for securing an antifriction bearing element to a shaft.**

(30) Priority : **28.03.88 SE 8801137**

(43) Date of publication of application :
**27.12.89 Bulletin 89/52**

(45) Publication of the grant of the patent :
**07.10.92 Bulletin 92/41**

(84) Designated Contracting States :
**DE FR GB IT**

(56) References cited :
**CH-A- 60 165**
**DE-A- 3 317 483**

(56) References cited :
**DE-B- 1 031 060**
**DE-C- 307 838**
**DE-C- 717 866**
**GB-A- 1 452 216**
**US-A- 4 160 608**

(73) Proprietor : **SKF Nova AB**
**S-415 50 Göteborg (SE)**

(72) Inventor : **Adolfsson, Rune**
**Skyttegatan 4**
**S-502 43 Boras (SE)**

(74) Representative : **Forsberg, Lars-Ake et al**
**SKF NOVA AB Patent Department**
**S-415 50 Göteborg (SE)**

EP 0 348 365 B1

## Description

The present invention relates to a device for securing the inner ring of a bearing having a raceway for a rolling element to a shaft having an axis and a peripheral surface defining a contact zone comprising at least one circumferentially extending continuous sleeve portion projecting axially from one end of the inner ring formed integrally therewith, said sleeve portion having external threads with flanks disposed at a predetermined angle to the axis of the shaft and disposed radially inwardly of said raceway, and a locking member having internal threads with flank angle complementing the external threads, wherein said locking member and inner ring have confronting engagable contact surfaces disposed at a common angle to the axis of the shaft.

A device of this type is disclosed in US-A-4160608.

Other devices for securing bearings to a shaft are disclosed in DE-B-1031060 and GB-A-1452216. In the device shown in DE-B-1031060 a separate clamping sleeve is used. Further, the clamping force is focused under the raceway. In the device shown in GB-A-1452216 two split sleeves are provided with cam surfaces cooperating with corresponding cam surfaces on sleeve portions on the inner ring of a bearing. When the split sleeves are axially moved in opposite directions the inner ring is clamped to the axis.

When mounting a machine element, such as a bearing on a shaft it is possible to either mount the machine element directly upon the shaft by means of a press fit, a shrinkage fit or a glue joint or by means of a clamping sleeve having tapering grooves or threads. In the latter case the clamping force against the shaft is created mainly by an axial force against the machine element, e.g. effected by a nut, which is tightened along a threaded portion of the clamping sleeve against one end surface of the machine element. The clamping sleeve and the nut are manufactured and stored as individual and separate members, which results in high manufacturing costs and time-consuming mounting.

The purpose of the present invention is to provide a device of the type mentioned above, which results in a less expensive manufacture and simplified mounting as compared to earlier known devices. This has been obtained by giving the invention the characterizing features stated in the claims following hereinafter.

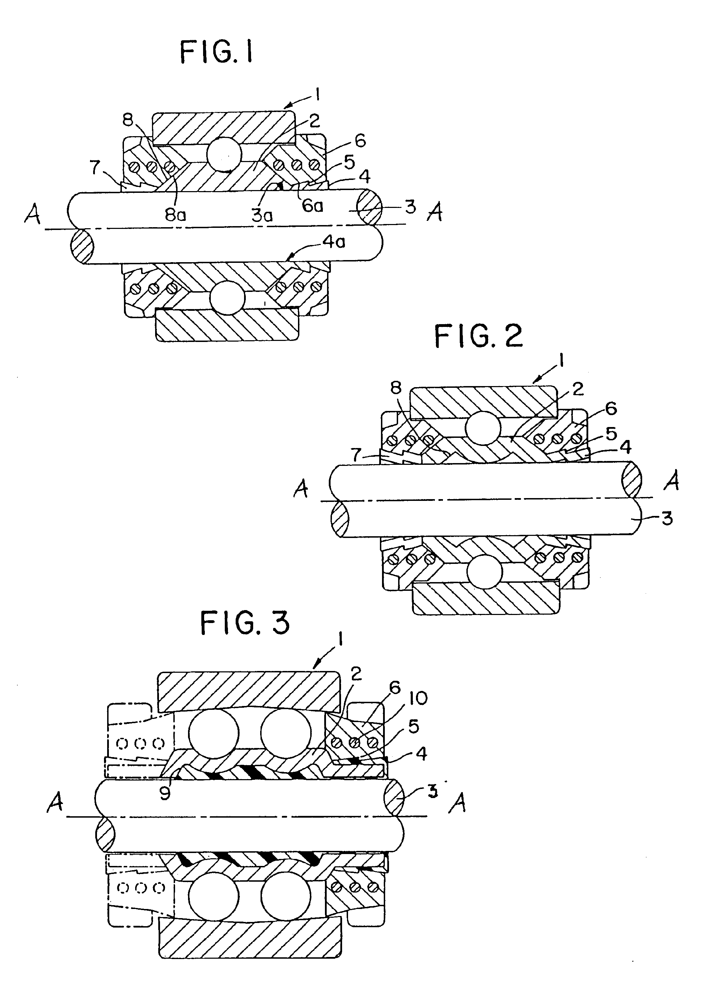

The invention will be described in detail with reference to various embodiments shown in the accompanying drawings, in which Figs. 1-3 show axial sections through different embodiments of the invention.

It is to be understood that these embodiments are only illustrative of the invention and that various modifications thereof can be made within the scope of the claims.

Fig. 1 shows a machine element in form of an inner race ring 2 of a ball bearing 1, which is mounted on a shaft 3. On opposite sides thereof, the inner race ring 2 is provided with axially extended sleeve-shaped portions 4 provided with external threads 5. The inner race ring 2 as well as the portions 4 associated therewith are made of solid material. A nut 6 is tightened on each one of the sleeve-shaped portions 4, which are slotted as illustrated by reference numeral 7, in order to obtain a clamping effect. Preferably, the thread 5 has a large pitch and the flank forms a comparatively small angle to the axis of the sleeve. When tightening the nut 6, the sleeve-shaped portion 4 due to wedge effect will be radially contracted under the nut 6 and it will be frictionally secured to the shaft 3. The increase in force, thus will mainly take place under the nut 6. Preferably, the contact surface 8 between the inner race ring 2 and the nut 6 has an oblique angle for achieving a wedging effect.

According to the embodiment shown in Fig. 2 the inner race ring 2 with the associated slotted, sleeve-shaped portions 4 are made of pressed sheet metal. In Fig. 3 the inner race ring 2 and the sleeve-shaped portion 4 are made of pressed sheet metal embedded in polymeric material 9, whereby the threads 5 of the sleeve-shaped portions are formed by the polymeric material. In the illustrated embodiments a plastic nut is used, which is reinforced with a helical steel member.

## Claims

1. A device for securing the inner ring (2) of a bearing having a raceway for a rolling element to a shaft (3) having an axis (A-A) and a peripheral surface defining a contact zone (3a) comprising at least one circumferentially extending continuous sleeve portion (4) projecting axially from one end of the inner ring formed integrally therewith, said sleeve portion (4) having external threads with flanks disposed radially inwardly of said raceway, and a locking member (6) having internal threads with flank angle complementing the external threads, wherein said locking member and inner ring have confronting engagable contact surfaces (8, 8') disposed at a common angle to the axis (A-A) of the shaft, **characterized in that** the common angle of contact surfaces (8, 8') is greater than the flank angle of said internal threads of said locking member (6) whereby said sleeve portion (4) is radially contracted to frictionally lock said contact zone (3a) relative to the bore surface (4a) upon further rotation of the locking member (6) from a point where said contact surfaces (8, 8ª) engage, and further characterized in that the flanks of the internal and external threads of the sleeve portion and the locking member form a comparatively small angle to the axis of the sleeve such that a wedging effect is achieved.

2. A device according to claim 1, wherein said sleeve-shaped portions (4) are slotted (7).

3. A device according to claim 1 or 2, wherein the contact surface (8) between the inner ring (2) and the locking member (6) is tapering.

4. A device according to any of the preceding claims, wherein the inner ring (2) and the sleeve-shaped portions (4) are made of pressed sheet metal.

5. A device according to claim 4, wherein the sheet metal is embedded in polymeric material (9).

**Patentansprüche**

1. Vorrichtung zur Befestigung eines Innenring (2) eines Lagers mit einer Rille für ein Wälzelement auf einer Welle (3) mit einer Mittelachse (A-A) und einer Umkreisfläche die eine Berührungszone (3a) mit mindestens einem umkreisförmig verlaufenden durchgehenden Hülsenbereich (4) der aus dem einen Ende des damit aus einem Stück gebildeten Innenringes vorsteht, wobei der Hülsenbereich (4) ein Aussengewinde mit innerhalb der Rille gelegenen Flanken und ein Riegelglied (6) mit Innengewinde mit einer das Aussengewinde ergänzenden Flankenneigung, wobei dieses Riegelglied und die dem Innenring gegenüberliegenden anlegungsbaren Berührungsflächen (8, 8′) einen gemeinsamen Winkel zur Mittelachse (A-A) aufweisen, **dadurch gekennzeichnet,** dass der gemeinsame Winkel der Berührungsflächen (8, 8′) grösser ist als der Flankenwinkel zwischen den Innengewinden des Riegelgliedes (6), wodurch der Hülsenbereich (4) radiell zusammengezogen wird um mittels Reibschluss die Berührungszone (3a) auf der Bohrungsfläche (4a) zu befestigen bei fortgesetztem Drehen des Rigelgliedes (6) von einer Stelle, wo sich die Berührungsflächen (8, 8′) aufeinander legen, sowie weiter dadurch gekennzeichnet, dass die Flanken der Innengewinde und Aussengewinde des Hülsenbereiches und des Riegelgliedes einen verhältnismässig geringen Winkel mit der Hülsenachse zur Ausbildung der Keilwirkung bilden.

2. Vorrichtung gemäss Patentanspruch 1, **dadurch gekennzeichnet,** dass die hülsenförmigen Bereiche (4) geschlitzt (7) sind.

3. Vorrichtung gemäss Patentanspruch 1 oder 2, **dadurch gekennzeichnet,** dass die Berührungsfläche (8) zwischen dem Innering (2) und dem Riegelglied (6) konisch ist.

4. Vorrichtung gemäss einem der vorhergehenden Patentansprüche, **dadurch gekennzeichnet,** dass der Innenring (2) und die hülsenförmigen Bereiche (4) aus gestanztem Blech hergestellt sind.

5. Vorrichtung gemäss Patentanspruch 4, **dadurch gekennzeichnet,** dass das Blechmaterial in Polymerplast (9) eingebettet ist.

**Revendications**

1. Dispositif pour fixer la bague (2) d'un roulement avec piste pour élément roulant, sur un arbre (3) ayant un axe (A-A) et une surface périphérique définissant une zone de contact (3a) comprenant au moins une portion continue en forme de manchon (4) s'étendant circonférentiellement et en saillie axiale à partir d'une extrémité de la bague intérieure dont elle est intégralement solidaire, ladite portion en forme de manchon (4) ayant un filetage extérieur avec flancs de filets disposés radialement intérieurement par rapport à ladite piste, et un organe de blocage (6) présentant un filetage intérieur avec angle de flanc complétant le filetage extérieur, ledit organe de blocage et ladite barye intérieure ayant des surfaces de contact en regard (8, 8a) qui peuvent venir en appui mutuel et sont disposées selon un angle commun par rapport à l'axe (A-A) de l'arbre, caractérisé en ce que l'angle commun des surfaces de contact (8, 8a) est plus grand que l'angle de flanc dudit filetage interne dudit organe de blocage (6), ladite portion de manchon (4) étant contractée radialement pour immobiliser par frottement ladite zone de contact (3a) par rapport à la surface d'alésage (4a) grâce à la rotation de l'organe de blocage (6) à partir d'un point où les surfaces de contact (8, 8a) sont en appui mutuel, et caractérisé en outre en ce que les flancs des filetages intérieurs et extérieurs de la portion en forme de manchon et de l'organe de blocage forment un angle comparativement petit par rapport à l'axe du manchon de sorte que l'on obtient un effet de coin.

2. Dispositif selon revendication 1, où lesdites portions (4) en forme de manchon sont fendues (7).

3. Dispositif selon revendication 1 ou 2, où la surface de contact (8) entre la bague intérieure (2) et l'organe de blocage (6) est conique.

4. Dispositif selon l'une quelconque des revendications précédentes, où la bague intérieure (2) et les portions (4) en forme de manchon sont en tôle emboutie.

5. Dispositif selon revendication 4, où la tôle est noyée dans un polymère (9).

## FIG.1

## FIG.2

## FIG.3